# EUROPEAN PATENT APPLICATION

(11) **EP 4 755 697 A1**
(43) Date of publication of application: **10.06.2026**
(21) Application number: 25218864.4
(22) Date of filing: 26.11.2025
(51) Int. Cl.: B60L 7/18, B60L 15/20, B60L 50/60

(54) **BATTERY ELECTRIC VEHICLE**

(30) Priority: 04.12.2024 JP 2024211187
(71) Applicant: Toyota Jidosha Kabushiki Kaisha, Toyota-shi, Aichi-ken 471-8571 (JP)
(72) Inventor: ISAMI, Yoichiro, TOYOTA-SHI, AICHI-KEN, 471-8571 (JP); YUASA, Ryohei, TOYOTA-SHI, AICHI-KEN, 471-8571 (JP); FURUHASHI, Yusuke, TOYOTA-SHI, AICHI-KEN, 471-8571 (JP)
(74) Representative: Cabinet Beau de Loménie

(57) **Abstract**

A battery electric vehicle (100) configured to use an electric motor (10) as a driving power device includes a controller (30; 31; 32; 33; 34; 35) configured to control the battery electric vehicle (100), and a shifter. The controller (30; 31; 32; 33; 34; 35) is configured to switch between an automatic mode and a manual mode in accordance with a driver's operation of the battery electric vehicle (100), the automatic mode allowing the battery electric vehicle (100) to drive as a normal battery electric vehicle, the manual mode allowing the battery electric vehicle (100) to simulate manual transmission driving by receiving a virtual shift operation from the shifter, and, in the manual mode, switch regenerative braking force of the electric motor (10) in accordance with the virtual shift operation.

## Description

### 1. Field of the Invention

The disclosure relates to a technology for controlling a battery electric vehicle including an electric motor as a driving source.

### 2. Description of Related Art

Japanese Unexamined Patent Application Publication No. 2024-157909 (JP 2024-157909 A) describes a battery electric vehicle that uses an electric motor as a driving power unit. The battery electric vehicle includes a paddle shifter and a motor controller. The paddle shifter is designed to perform an upshift operation, a downshift operation, and a mode switch operation. The motor controller switches the control mode between a manual mode and an automatic mode in response to the mode switch operation. The automatic mode is a control mode to drive a battery electric vehicle as a typical battery electric vehicle. In the manual mode, a manual shift operation of a manual transmission (MT) vehicle is simulated.

### SUMMARY OF THE INVENTION

There is a battery electric vehicle equipped with a manual mode to enable driving operations similar to those of an MT vehicle and an automatic mode to drive the battery electric vehicle as a normal battery electric vehicle. In such battery electric vehicles, drivers are able to switch the mode between the manual mode and the automatic mode through their operation. In battery electric vehicles, there is known a function that changes the deceleration by changing the magnitude of regenerative braking force of the electric motor. However, there has not been sufficient consideration given to a combination of battery electric vehicles equipped with a manual mode and an automatic mode with the function to select the magnitude of regenerative braking force.

An aspect of the disclosure is a battery electric vehicle configured to use an electric motor as a driving power device. The battery electric vehicle includes a controller configured to control the battery electric vehicle, and a shifter. The controller is configured to switch between an automatic mode and a manual mode in accordance with a driver's operation of the battery electric vehicle. The automatic mode allows the battery electric vehicle to drive as a normal battery electric vehicle. The manual mode allowing the battery electric vehicle to simulate manual transmission driving by receiving a virtual shift operation from the shifter. The controller is configured to, in the manual mode, switch regenerative braking force of the electric motor in accordance with the virtual shift operation.

In the above aspect, regenerative characteristics of the electric motor in the manual mode may be different from the regenerative characteristics in the automatic mode.

In the above aspect, the automatic mode may include drive modes with different levels of the regenerative braking force.

In the above aspect, the controller may be configured to, when a control mode is switched from the manual mode to the automatic mode, set the drive mode to a previously set drive mode.

In the above aspect, the controller may be configured to switch the drive mode in accordance with an operation of the shifter.

In the above aspect, the shifter may be a paddle shifter made up of a pair of paddles. The controller may be configured to, in the manual mode, upshift a virtual shift position in accordance with an operation of one of the paddles of the paddle shifter and downshift the virtual shift position in accordance with an operation of the other of the paddles of the paddle shifter. The controller may be configured to, in the automatic mode, reduce the regenerative braking force in accordance with an operation of the one of the paddles and increase the regenerative braking force in accordance with an operation of the other of the paddles.

The battery electric vehicle according to the aspect of the disclosure has the manual mode and the automatic mode. In the manual mode, the regenerative braking force of the electric motor is switched in accordance with a virtual shift operation. According to the aspect, switching of braking force of an MT vehicle in accordance with a shift operation is simulated also on the regenerative side, which enhances the sense of reality as if actually driving an MT vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram that shows the configuration of a control system of a battery electric vehicle according to an embodiment;
FIG. 2 is a block diagram that shows the functions of a BEV-ECU;
FIG. 3 is a graph that shows a virtual transmission torque defined for each shift position in a manual mode;
FIG. 4 is a graph that shows a regenerative braking force switched for each shift position in a manual mode; and
FIG. 5 is a graph that shows the amounts of regenerative braking force in multiple drive modes.

### DETAILED DESCRIPTION OF EMBODIMENTS

An embodiment of the disclosure will be described with reference to the accompanying drawings.

### 1. Configuration of Control System of Battery Electric Vehicle

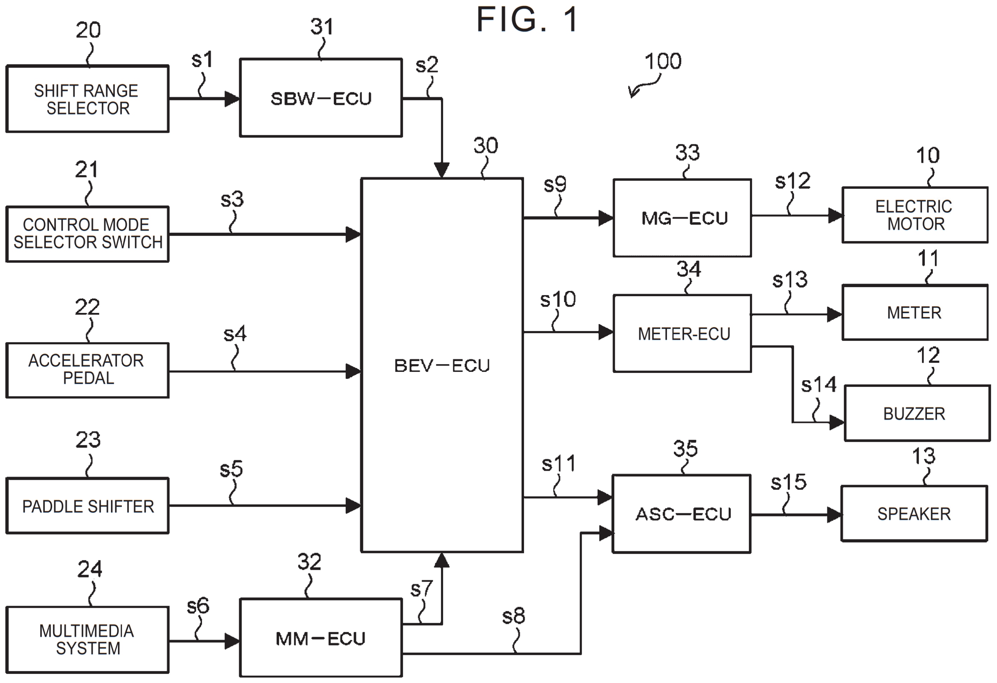

FIG. 1 is a diagram that shows the configuration of a control system of a battery electric vehicle 100 according to the embodiment of the disclosure. The battery electric vehicle 100 is a battery electric vehicle (BEV) that runs on electric energy stored in a battery. The control system of the battery electric vehicle 100 includes an electric motor 10 that is a driving power unit, a meter 11 that gives visual information to a driver, and a buzzer 12 and a speaker 13 that give audio information to the driver, as controlled targets. The battery electric vehicle 100 includes a plurality of electronic control units (ECUs) and an input device that inputs instructions from the driver to those ECUs, as a controller that controls these controlled targets. The ECUs include a battery electric vehicle (BEV)-ECU 30, a shift by wire (SBW)-ECU 31, a multi media (MM)-ECU 32, a motor generator (MG)-ECU 33, a meter-ECU 34, and an active sound control (ASC)-ECU 35. Input interfaces include a shift range selector 20, a control mode selector switch 21, an accelerator pedal 22, a paddle shifter 23, and a multimedia system 24.

The shift range selector 20 is an input interface for the driver to select a shift range. Selectable shift ranges include, for example, a parking range, a reverse range, a neutral range, and a drive range. When the driver operates the shift range selector 20, a signal s1 corresponding to the position of the operating member of the shift range selector 20 is output from the shift range selector 20 to the SBW-ECU 31. The SBW-ECU 31 determines the shift range based on the input signal s1 and outputs a signal S2 including information about the selected shift range to the BEV-ECU 30.

The control mode selector switch 21 is an input interface for switching the control mode of the battery electric vehicle 100 between an automatic mode and a manual mode. The automatic mode is a mode to control the electric motor 10 in accordance with normal output characteristics in response to an output request from the driver. The manual mode is a mode to cause the battery electric vehicle 100 to operate like an engine vehicle (manual transmission vehicle or MT vehicle) with manual shifting capability. In the manual mode, the output characteristics of the electric motor 10 can be switched in multiple stages by operating the paddle shifter 23 (described later). The control mode selector switch 21 may be an alternate switch or a momentary switch. When the driver operates the control mode selector switch 21, a signal s3 corresponding to the control mode specified by the operation is output from the control mode selector switch 21 to the BEV-ECU 30.

The accelerator pedal 22 is an input interface that acquires the operation amount (depression amount) when the driver depresses the accelerator pedal 22 as a driver's acceleration request. When the driver depresses the accelerator pedal 22, a signal s4 corresponding to the operation amount of the accelerator pedal 22 is output from an accelerator pedal stroke sensor to the BEV-ECU 30.

The paddle shifter 23 is an input interface made up of a pair of right and left paddles attached to a steering wheel or a steering column. When the driver pulls the paddle toward the driver, a signal s5 corresponding to the pulled paddle is output from the paddle shifter 23 to the BEV-ECU 30. While the manual mode is selected, the paddle shifter 23 serves as an input interface for switching the shift position in multiple stages. However, the battery electric vehicle 100 does not include a physical transmission. Here, the shift position is not the actual shift position of a transmission and is one of parameters of a physical model (described later) used to calculate engine torque. In the manual mode, a signal s5 that is output when the right paddle is pulled is a signal that requests upshifting, and a signal s5 that is output when the left paddle is pulled is a signal that requests downshifting. On the other hand, when the automatic mode is selected, the paddle shifter 23 serves as an input interface for switching the amount of regenerative braking force in multiple stages. In the automatic mode, a signal s5 that is output when the right paddle is pulled is a signal that requests a reduction in regenerative braking force, while a signal s5 that is output when the left paddle is pulled is a signal that requests an increase in regenerative braking force.

The multimedia system 24 is an input interface equipped with a touch screen that displays various pieces of information, such as navigation and audio settings, and accepts a driver's touch operation. The driver is able to perform various settings for the battery electric vehicle 100 by operating the touch screen. When the driver operates the touch screen, a signal s6 corresponding to the details of the operation is output from the multimedia system 24 to the MM-ECU 32. The MM-ECU 32 determines a setting requested by the driver based on the input signal s6. When the setting requested by the driver is a driving mode, the MM-ECU 32 outputs a signal s7 including information about the driving mode selected by the driver to the BEV-ECU 30. The driving mode is allowed to be set in the manual mode. The driving mode that suits driver's preference can be selected from among a plurality of driving modes. When the setting requested by the driver is the on or off state or sound level of the speaker 13, the MM-ECU 32 outputs a signal s8 including information about the on or off state or sound level of the speaker 13 to the ASC-ECU 35.

The BEV-ECU 30 calculates the torque to be output from the electric motor 10 (hereinafter, referred to as motor torque) based on the input signals s2, s3, s4, s5, s7. However, in addition to these signals, other information including at least vehicle speed is used to calculate motor torque. The vehicle speed is measured using speed sensors respectively installed on wheels. The BEV-ECU 30 calculates motor torque in a manner according to the control mode specified by the signal s3. In the automatic mode, the BEV-ECU 30 calculates motor torque mainly based on the signal s4 and the vehicle speed. In the manual mode, the BEV-ECU 30 calculates motor torque mainly based on the signals s4, s5, s7, and the vehicle speed. The details of the method of calculating motor torque in each control mode will be described later. The BEV-ECU 30 outputs a signal s9 including information about the motor torque obtained through calculation to the MG-ECU 33. The MG-ECU 33 generates a signal s12 for PWM control of the electric motor 10 based on the signal s9, and controls the electric motor 10 with the signal s12.

The BEV-ECU 30 outputs a signal s10 including information to be displayed on the meter 11 and a buzzer sound request to the meter-ECU 34. The information to be displayed on the meter 11 includes, for example, the selected control mode, the shift position while the manual mode is selected, and a virtual engine rotation speed. The virtual engine rotation speed is one of the parameters of the physical model used to calculate motor torque in the manual mode. The meter-ECU 34 generates a signal s13 for displaying these pieces of information and controls the meter 11 based on the signal s13. The buzzer sound request is output when, for example, the driver is informed of the timing to downshift or upshift. When the signal s10 includes a buzzer sound request, the meter-ECU 34 generates a signal s14 and sounds the buzzer 12 based on the signal s14.

The BEV-ECU 30 outputs a signal s11 including information used to generate artificial engine sound to the ASC-ECU 35. The artificial engine sound is a sound that simulates the exhaust sound of an engine vehicle and that is emitted from the speaker 13 while the manual mode is selected. The information used to generate artificial engine sound includes, for example, virtual engine rotation speed, virtual engine torque, and virtual shift position. The virtual engine torque is one of the parameters of the physical model used to calculate motor torque in the manual mode. The ASC-ECU 35 generates a signal s15 to produce artificial engine sound based on these pieces of information and controls the speaker 13 based on the signal s15.

### 2. Functions of BEV-ECU

Next, the functions of the BEV-ECU 30 will be described. The BEV-ECU 30 includes at least a processor (processing circuit) and a memory. The memory includes a RAM that temporarily records data and a ROM that saves a program executable on the processor and various pieces of data relevant to the program. The program is composed of a plurality of instructions. The processor reads and executes the program and data from the memory, to generate the signal s9 to be output to the MG-ECU 33, the signal s10 to be output to the meter-ECU 34, and the signal s11 to be output to the ASC-ECU 35.

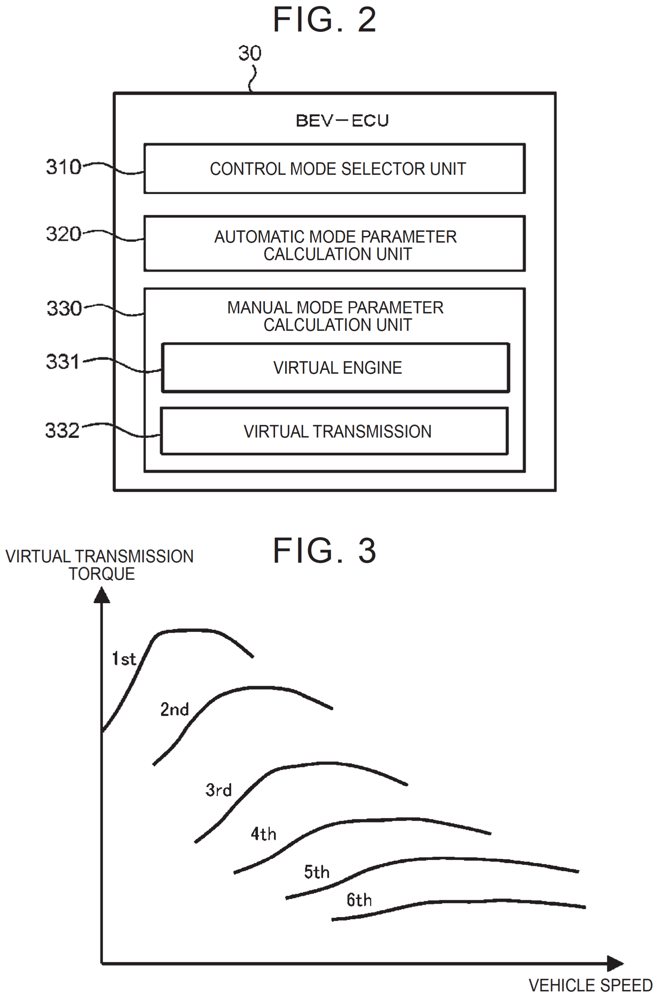

FIG. 2 is a block diagram that shows the functions of the BEV-ECU 30. The BEV-ECU 30 has functions as a control mode selector unit 310, an automatic mode parameter calculation unit 320, and a manual mode parameter calculation unit 330. These functions are implemented by the processor running one or more programs stored in the memory of the BEV-ECU 30.

The control mode selector unit 310 switches the mode of output control of the electric motor 10 for an operation input from the driver. The control modes that can be switched by the control mode selector unit 310 are the automatic mode and the manual mode. The control mode selector unit 310 switches the control mode in accordance with the signal s3 input from the control mode selector switch 21.

When the control mode is switched to the automatic mode by the control mode selector unit 310, the BEV-ECU 30 functions as the automatic mode parameter calculation unit 320. The automatic mode parameter calculation unit 320 executes output control according to the shift range selected by the shift range selector 20. For example, when the selected shift range is D range, the automatic mode parameter calculation unit 320 acquires the accelerator operation amount from the signal s4 of the accelerator pedal 22 and acquires the vehicle speed from the signal of the speed sensor (not shown). The automatic mode parameter calculation unit 320 has a motor torque map that uses the accelerator operation amount and the vehicle speed as parameters. The automatic mode parameter calculation unit 320 calculates the motor torque to be generated by the electric motor 10 by inputting the accelerator operation amount and the vehicle speed into the motor torque map, and outputs the signal s9 including information about the calculated motor torque to the MG-ECU 33.

In the motor torque map, the motor torque is defined to be a negative value when the accelerator operation amount is zero. In other words, when the accelerator operation amount is zero, the regenerative braking force of the electric motor 10 is activated to decelerate the battery electric vehicle 100. In the automatic mode, the driver is able to switch the amount of regenerative braking force by operating the paddle shifter 23. At this time, the amount of regenerative braking force may be switched by multiplying the motor torque calculated by using the motor torque map by a predetermined value, or a plurality of motor torque maps with different regenerative braking forces may be prepared in advance, or the amount of regenerative braking force may be switched by switching the motor torque map.

When the control mode is switched to the manual mode by the control mode selector unit 310, the BEV-ECU 30 functions as the manual mode parameter calculation unit 330. The manual mode parameter calculation unit 330 executes a process of calculating the drive wheel torque to be generated by a drive wheel and a process of calculating the motor torque based on the drive wheel torque.

The manual mode parameter calculation unit 330 calculates the drive wheel torque using the physical model of an engine vehicle. The physical model includes a virtual engine 331 that models an engine and a virtual transmission 332 that models a manual transmission that can be manually shifted. The virtual transmission 332 also includes a model of an automated clutch.

In the virtual engine 331, the relationship between the virtual engine rotation speed and the virtual engine torque is defined for each accelerator operation amount. The rotation speed-torque characteristics of the virtual engine 331 can be set to characteristics assuming a gasoline engine or can be set to characteristics assuming a diesel engine. In addition, the rotation speed-torque characteristics can be set to characteristics assuming a naturally aspirated engine, or can be set to characteristics assuming a turbocharged engine. The virtual engine rotation speed is calculated based on a virtual speed ratio calculated by the virtual transmission 332, a virtual speed reduction ratio from the virtual transmission 332 to the drive wheel, and a vehicle speed. The virtual engine torque calculated by the virtual engine 331 is input to the virtual transmission 332.

In the virtual transmission 332, a virtual speed ratio is set for each shift position. For example, when the shift positions are first gear to sixth gear, the maximum virtual speed ratio is set for first gear, and the virtual speed ratios decrease in order of second gear, third gear, fourth gear, fifth gear, and sixth gear. The virtual transmission torque is calculated using the virtual speed ratio calculated by the virtual transmission 332 and the virtual engine torque input from the virtual engine 331. The manual mode parameter calculation unit 330 calculates the drive wheel torque from the virtual transmission torque and the speed reduction ratio.

The manual mode parameter calculation unit 330 calculates the motor torque by multiplying the drive wheel torque by an actual speed reduction ratio from the output shaft of the electric motor 10 to the drive wheel, and outputs the signal s9 including information about the calculated motor torque to the MG-ECU 33. However, when the battery electric vehicle 100 includes electric motors 10 respectively on both the front wheel side and the rear wheel side, the manual mode parameter calculation unit 330 calculates the motor torque of the front electric motor based on the torque distribution of the drive wheel torque to the front wheels, and calculates the motor torque of the rear electric motor based on the torque distribution of the drive wheel torque to the rear wheels.

### 3. Regenerative Braking Force in Manual Mode

In the manual mode, the virtual transmission torque is calculated based on the physical model of an engine vehicle. In the physical model used in the manual mode parameter calculation unit 330, the relationship between the vehicle speed and the virtual transmission torque is defined by a torque map. FIG. 3 shows the relationship between the vehicle speed and the virtual transmission torque when the accelerator operation amount is maximum for each virtual speed ratio. The virtual transmission torque calculated from the torque map switches accordingly when the virtual speed ratio is changed.

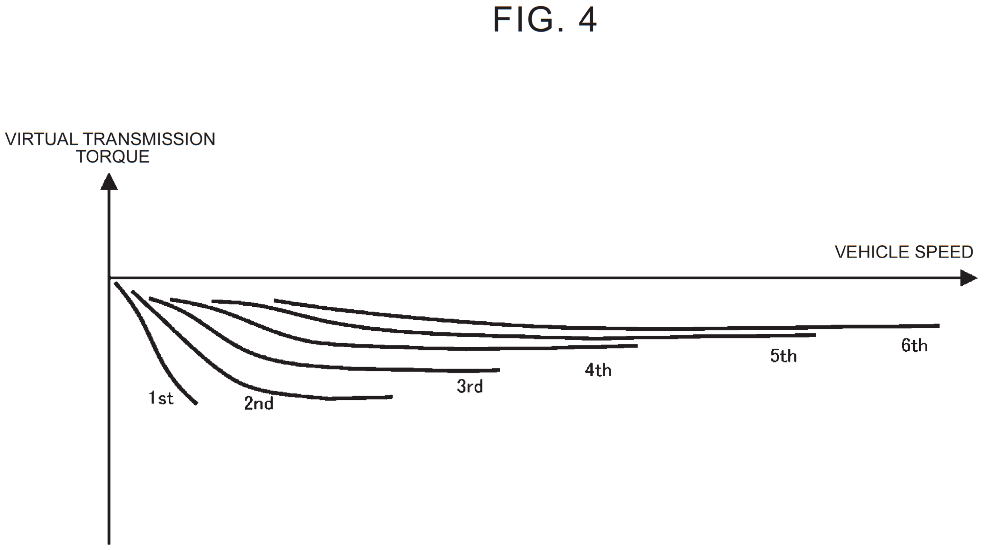

When the accelerator operation amount is zero, the virtual transmission torque is a negative value. The negative virtual transmission torque is produced by the regenerative braking force of the electric motor 10. This is equivalent to the engine brake of an MT vehicle. FIG. 4 shows the relationship between the vehicle speed and the virtual transmission torque for each virtual speed ratio. The virtual transmission torque calculated from the torque map switches accordingly when the virtual speed ratio is changed. In other words, in the manual mode, the regenerative braking force of the electric motor 10 is switched according to the virtual shift operation using the paddle shifter 23.

The regenerative characteristics, that is, the regenerative braking force for each virtual speed ratio, defined by the torque map, in the manual mode is determined so as to simulate the engine brake of an MT vehicle. On the other hand, the regenerative characteristics of the electric motor 10 in the automatic mode do not simulate the engine brake of an MT vehicle. Therefore, the regenerative characteristics in the manual mode differ from the regenerative characteristics in the automatic mode. In the manual mode, the drive characteristics of the electric motor 10 are controlled so as to simulate the drive characteristics of an MT vehicle. Furthermore, the regenerative characteristics of the electric motor 10 are also set to the regenerative characteristics unique to the manual mode that simulates engine brake, which enhances the sense of reality as if driving an actual MT vehicle.

In the manual mode parameter calculation unit 330, the torque map may be switched for each virtual speed ratio, and the virtual transmission torque may be calculated from the torque map for each virtual speed ratio. Alternatively, the virtual engine torque may be calculated from a single torque map, and the virtual transmission torque may be calculated from the virtual engine torque and the virtual speed ratio.

### 4. Operating Member for Switching Regenerative Braking Force.

The paddle shifter 23 is used as an operating member for performing virtual shift operations in the manual mode, and is used as a deceleration selector to switch the amount of regenerative characteristics, that is, the deceleration, in the automatic mode. When the paddle shifter 23 is used according to each mode, the operating members mounted on the battery electric vehicle 100 can be effectively used, which eliminates the need to mount different operating members for the manual mode and the automatic mode.

In the automatic mode, the driver is able to increase the amount of regenerative braking force by performing the same operation as downshifting in the manual mode, and is able to reduce the amount of regenerative braking force by performing the same operation as upshifting in the manual mode. In an MT vehicle, engine brake increases as the shift position is shifted down, while the engine brake reduces as the shift position is shifted up. Therefore, the operation to increase regenerative braking force in the automatic mode is the same operation as downshifting in the manual mode and the operation to reduce regenerative braking force is the same operation as upshifting in the manual mode, so it is easier to intuitively understand the operations, and it is possible to reduce operating errors.

### 5. Multiple Drive Modes

The automatic mode may include multiple drive modes with different amounts of regenerative braking force. Then, in the automatic mode, the amount of regenerative braking force may be switched by switching the drive mode in accordance with the driver's operation of the paddle shifter 23.

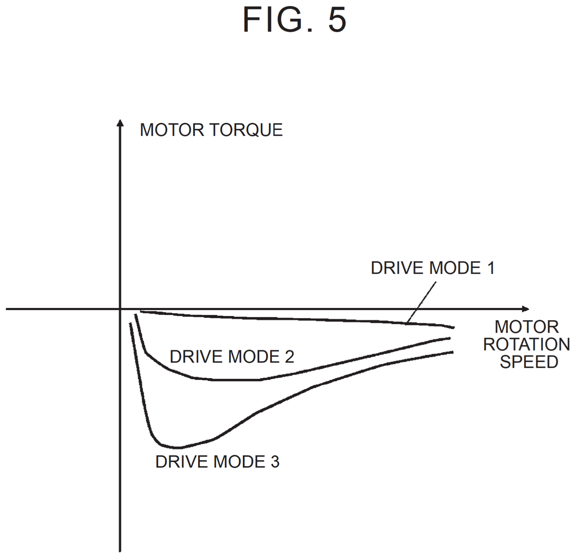

FIG. 5 shows an example of multiple drive modes. The ordinate axis of the graph represents the torque of the electric motor 10 that generates regenerative braking force, while the abscissa axis represents the motor rotation speed. There are three types of drive modes, that is, Drive Mode 1, Drive Mode 2, and Drive Mode 3, and the amount of regenerative braking force is preset for each drive mode. When the right paddle of the paddle shifter 23, which reduces the regenerative braking force, is pulled, the BEV-ECU 30 shifts the drive mode to a drive mode with one stage lower regenerative braking force. When the left paddle, which increases the regenerative braking force, is pulled, the BEV-ECU 30 shifts the drive mode to a drive mode with one stage higher regenerative braking force.

Each drive mode may have a name that reflects the situation for reference when the driver makes a selection. For example, the drive modes may be named as eco mode, normal mode, and sport mode in order from the lowest regenerative braking force. When the regenerative characteristics are set for each drive mode, it is easier for the driver to select the amount of regenerative braking force that suits the driver's preference and situation.

In this case, when the control mode is switched from the manual mode to the automatic mode, the BEV-ECU 30 may switch the drive mode to a previously set mode. For example, assuming that the driver selects the sport mode while driving in the automatic mode. Then, assuming that the driver switches the control mode from the automatic mode to the manual mode, and then switches back from the manual mode to the automatic mode. At this time, the BEV-ECU 30 sets the drive mode to the sport mode that had been previously selected by the driver. In this way, the driver can take over the settings of the drive mode suited to the driver's preference without performing any selection operations his or herself.

## Claims

1. A battery electric vehicle (100) configured to use an electric motor (10) as a driving power device, the battery electric vehicle (100) comprising:
a controller (30; 31; 32; 33; 34; 35) configured to control the battery electric vehicle (100); and
a shifter, wherein
the controller (30; 31; 32; 33; 34; 35) is configured to
switch between an automatic mode and a manual mode in accordance with a driver's operation of the battery electric vehicle (100), the automatic mode allowing the battery electric vehicle (100) to drive as a normal battery electric vehicle, the manual mode allowing the battery electric vehicle (100) to simulate manual transmission driving by receiving a virtual shift operation from the shifter, and
in the manual mode, switch regenerative braking force of the electric motor (10) in accordance with the virtual shift operation.

2. The battery electric vehicle (100) according to claim 1, wherein regenerative characteristics of the electric motor (10) in the manual mode are different from the regenerative characteristics in the automatic mode.

3. The battery electric vehicle (100) according to claim 1 or 2, wherein the automatic mode includes drive modes with different levels of the regenerative braking force.

4. The battery electric vehicle (100) according to claim 3, wherein the controller (30; 31; 32; 33; 34; 35) is configured to, when a control mode is switched from the manual mode to the automatic mode, set the drive mode to a previously set drive mode.

5. The battery electric vehicle (100) according to claim 3, wherein the controller (30; 31; 32; 33; 34; 35) is configured to switch the drive mode in accordance with an operation of the shifter.

6. The battery electric vehicle (100) according to any one of claims 1 to 5, wherein:
the shifter is a paddle shifter (23) made up of a pair of paddles; and
the controller (30; 31; 32; 33; 34; 35) is configured to
in the manual mode, upshift a virtual shift position in accordance with an operation of one of the paddles of the paddle shifter (23),
in the manual mode, downshift the virtual shift position in accordance with an operation of the other of the paddles of the paddle shifter (23),
in the automatic mode, reduce the regenerative braking force in accordance with an operation of the one of the paddles, and
in the automatic mode, increase the regenerative braking force in accordance with an operation of the other of the paddles.
